# EUROPEAN PATENT SPECIFICATION

(11) **EP 3 498 507 B1**
(45) Date of publication and mention of the grant of the patent: **06.08.2025**
(21) Application number: 17839096.9
(22) Date of filing: 29.06.2017
(51) Int. Cl.: B60H 1/24, B60H 1/00, F24F 13/14

(54) **AIR BLOWOUT APPARATUS**
LUFTAUSBLASVORRICHTUNG
APPAREIL DE SOUFFLAGE D'AIR

(30) Priority: 09.08.2016 JP 2016156596
(43) Date of publication of application: 19.06.2019
(73) Proprietor: DENSO THERMAL SYSTEMS S.p.A., 10046 Poirino (Torino) (IT)
(72) Inventor: MOTOMURA, Hirohisa, Kariya-city, Aichi 448-8661 (JP); VITALI, Domenico, 10046 Poirino (Torino) (IT); PILUTTI, Paolo, 10046 Poirino (Torino) (IT); MONGELLI, Giovanni, 10046 Poirino (Torino) (IT)
(74) Representative: TBK
(86) International application number: PCT/JP2017/023905
(87) International publication number: WO 2018/030022

(56) References cited:
- JP-A- 2004 026 038
- JP-A- 2004 026 038
- JP-A- 2014 210 564
- JP-A- 2014 210 564
- JP-A- H06 307 711
- JP-A- S5 719 542
- JP-A- S55 100 403
- JP-A- S56 117 039
- JP-U- H0 328 911
- JP-U- H0 328 911
- US-A- 3 274 916

## Description

### TECHNICAL FIELD

The present invention relates to an air blowout apparatus configured to blowout an air.

### BACKGROUND ART

Patent Literature 1 discloses an air blowout apparatus configured to blowout an air from a blowing port while bending the air along a guide wall by utilizing the Coanda effect. The air blowout apparatus includes a blowing port for blowing out the air into a target space, a duct for providing an air flow channel connected to an air flow upstream side of the blowing port, and an air flow deflection member configured to generate two air flows having different flow rates in the air flow channel in the duct.

The duct includes a first wall and a second wall that faces the first wall. In the air flow channel in the duct, a first flow channel is defined between the air flow deflection member and the first wall, and a second flow channel is defined between the air flow deflection member and the second wall. The air flow deflection member is configured to switch between a first state, in which an air flow at a high flow rate is produced in the first flow channel and an air flow at a low flow rate is produced in the second flow channel, and a second state, in which an air flow different from the first state is produced in the duct. A part of the first wall on the blowing port side configures a guide wall for guiding the air flow at the high flow rate such that the air flow at the high flow rate from the first flow channel, which is generated by the air flow deflection member is bent along the wall surface, and the direction of the air flow at the high flow rate matches a direction from the second wall toward the first wall.

In the air blowout apparatus, when the air flow deflection member forms the first state, the air flow at the high flow rate flowing through the first flow channel is bent along the guide wall by the Coanda effect, and the air flow at the low flow rate flowing through the second flow channel is drawn into the air flow at the high flow rate. As a result, a bending angle when the air flowing through the air flow channel in the duct is bent and blown out from the blowing port is increased.

In the conventional air blowout apparatus described above, when the air flow deflection member forms the first state, since a part of the air flowing in the duct is diffused from the blowing port, an air volume of the blowing air blown out from the blowing port in the direction from the second wall toward the first wall may become unexpectedly small. In the air blowout apparatus, a stable air volume in the direction from the second wall toward the first wall in the first state is desired. In order to increase the air volume in the direction from the second wall toward the first wall in the first state, a configuration is conceivable in which a protrusion portion protruding from the second wall toward the first wall is provided in the vicinity of the blowing port of the second wall. However, this protrusion portion may reduce the air volume blown out from the blowing port when the air flow deflection member forms the second state. In the air blowout apparatus, a stable air volume of the blowing air is desired even in the second state. Patent literature 2 discloses a room air conditioner comprising two flaps for influencing an air flow. Patent literature 4 discloses a vehicle air conditioner having the features in the preamble of claim 1. Patent literature 3, 5 and 6 disclose further prior art.

### PRIOR TECHNICAL LITERATURE

### PATENT LITERATURE

PATENT LITERATURE 1: JP2014-210564A
PATENT LITERATURE 2: JP S57 19542 A
PATENT LITERATURE 3: US 3 274 916 A
PATENT LITERATURE 4: JP 2004 026038 A
PATENT LITERATURE 5: JP S55 100403 A
PATENT LITERATURE 6: JP H03 28911 U

### SUMMARY OF INVENTION

It is an object of the present disclosure to provide an air blowout apparatus configured to secure a stable air volume of blowing air regardless of whether an air flow produced in a duct is in a first state or a second state.

The object is solved by an air blowout apparatus according to claim 1. Further advantageous embodiments are disclosed by the dependent claims.

### BRIEF DESCRIPTION OF THE DRAWINGS

The above and other objects, features and advantages of the present disclosure will become more apparent from the following detailed description made with reference to the accompanying drawings. In the drawings:
FIG. 1 is a cross-sectional view showing a state in which an air blowout apparatus and an air conditioning unit are mounted on a vehicle according to a first embodiment.
FIG. 2 is a schematic view of a portion of a vehicle front side in a vehicle interior as viewed from above the vehicle according to the first embodiment;
FIG. 3 is a cross-sectional view taken along a line III-III of FIG. 2, showing a state in which the air blowout apparatus is in a face blowing mode;
FIG. 4 is a cross-sectional view along the same line as that in FIG. 3, and shows a state in which the air blowout apparatus is in an upper vent blowing mode;
FIG. 5 is a cross-sectional view of the same line as that in FIG. 3, and shows a state in which the air blowout apparatus is in a defroster blowing mode;
FIG. 6 is a schematic diagram showing a configuration of an air conditioning unit in FIG. 1;
FIG. 7 is a diagram illustrating a flow of an air blown out by the air blowout apparatus in the vehicle interior in the face blowing mode;
FIG. 8 is a diagram illustrating the flow of the air blown out by the air blowout apparatus in the vehicle interior in the defroster blowing mode;
FIG. 9 is a cross-sectional view of an air blowout apparatus in a comparative example, and showing a state of a face blowing mode.
FIG. 10 is a cross-sectional view of an air blowout apparatus of a comparative example, and showing a state of a defroster blowing mode;
FIG. 11 is a cross-sectional view of an air blowout apparatus according to another embodiment, and showing a state of the face blowing mode;
FIG. 12 is a cross-sectional view of an air blowout apparatus according to still another embodiment, and showing a state of the upper vent blowing mode; and
FIG. 13 is a cross-sectional view of an air blowout apparatus according to yet another embodiment, and showing a status of the defroster blowing mode.

### DESCRIPTION OF EMBODIMENTS

Hereinafter, multiple embodiments for implementing the disclosure will be described with reference to the drawings. In each of the embodiments, the same reference numerals are assigned to portions corresponding to the items described in the preceding embodiments, and a repetitive description thereof may be omitted. When only a part of the configuration is described in each embodiment, the other parts of the configuration are the same as those described above. Not only the combinations of the portions specifically described in the respective embodiments, but also the embodiments may be partially combined when there is no issue in the combinations in particular.

### (First Embodiment)

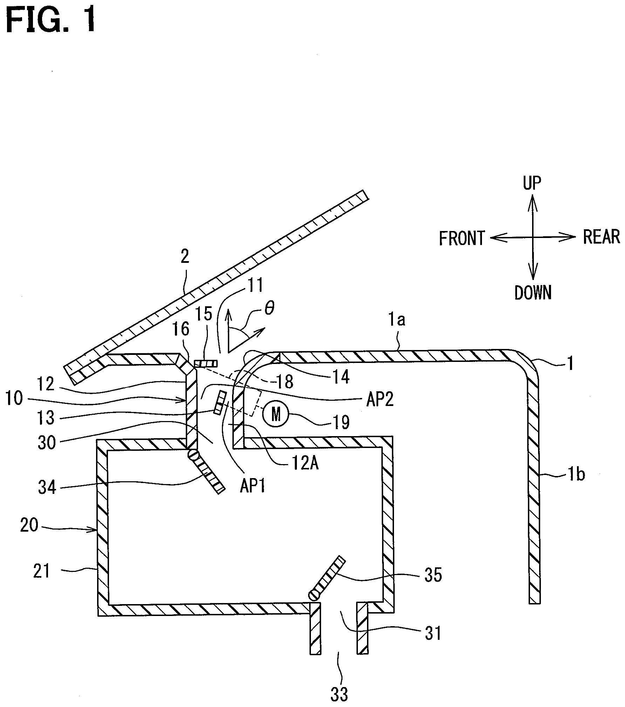

A first embodiment according to a disclosure will be described with reference to FIGS. 1 to 10. In the present embodiment, the air blowout apparatus is applied to a blowing port and a duct of an air conditioning unit mounted on a front portion of a vehicle. Arrows indicating upper, lower, front, rear, left, right, and the like in the respective drawings used in the description indicate the respective directions in a vehicle mounting state.

As shown in FIG. 1, an air blowout apparatus 10 includes a blowing port 11, a duct 12, an air flow deflection door 13, and an air flow deflection door 15. The blowing port 11 blows out an air into a vehicle interior space as a target space. The blowing port 11 is located on a windshield 2 side of an upper surface portion 1a of an instrument panel 1. In other words, when the windshield 2 is projected in a vertical direction with respect to the upper surface portion 1a, the blowing port 11 is located in a range within the upper surface portion 1a which overlaps with the windshield 2. The duct 12 connects the blowing port 11 with an air conditioning unit 20. The air flow deflection door 13 is located in the duct 12. The air conditioning unit 20 is located inside the instrument panel 1.

The instrument panel 1 is an instrument panel provided in a front portion of a vehicle interior, and has the upper surface portion 1a and a ornamental surface portion 1b which is a front portion. The instrument panel 1 is an entire panel located in front of a front seat in the vehicle interior including not only a portion where instruments are placed but also a portion where an audio device and an air conditioner are accommodated.

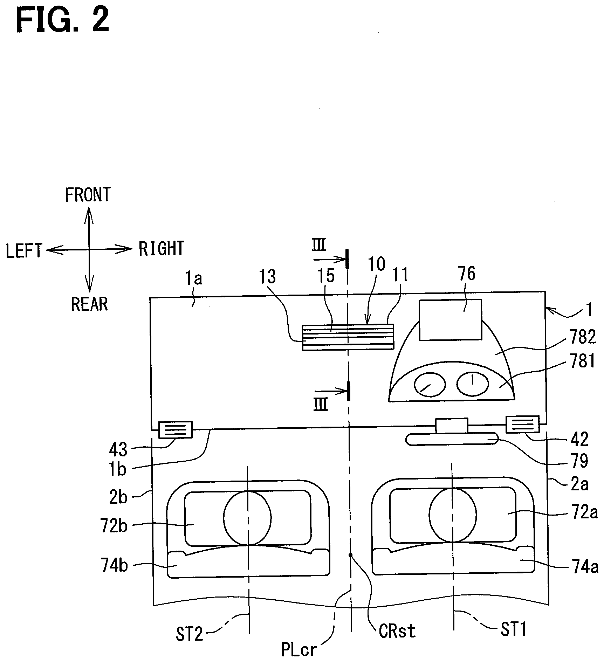

As shown in FIG. 2, a driver's seat 74a as a first seat and a front passenger seat 74b as a second seat are located in the vehicle interior. The two seats 74a and 74b are front seats in the vehicle interior, and placed on a rear side of the vehicle with respect to the instrument panel 1 side by side in a lateral direction, which is a vehicle width direction. In this example, the driver's seat 74a is located on a right side toward a front of the vehicle, and the front passenger seat 74b is located on a left side toward the front of the vehicle. The two seats 74a and 74b allow occupants 72a and 72b to be seated, respectively.

A head up display (HUD) 76, an instrument panel 781, and a meter hood 782 are located in front of the driver's seat 74a in the instrument panel 1. The instrument panel 781 is a meter panel including a speedometer, a tachometer, and the like, and the meter hood 782 is located so as to cover an upper portion of the instrument panel 781. A steering wheel 79 is located in front of the driver's seat 74a so as to project from the instrument panel 1 toward the driver's seat 74a.

The blowing port 11 has a shape elongated in the vehicle width direction. The shape of the blowing port 11 is rectangular in this example. The blowing port 11 is provided on the front side of the vehicle of the upper surface portion 1a of the instrument panel 1. The blowing port 11 is located on the vehicle front side in a vehicle longitudinal direction with respect to the driver's seat 74a and the front passenger seat 74b. The blowing port 11 is located at a center of the vehicle interior in the vehicle width direction. Assuming a virtual plane PLcr that passes through a center position CRst between the driver's seat 74a and the front passenger seat 74b in the vehicle width direction and divides the vehicle interior in the vehicle width direction, the blowing port 11 is located so as to be divided in the vehicle width direction by the virtual plane PLcr. The blowing port 11 is provided so that the blowing port 11 entirely enters a position between a center position ST1 of the driver's seat 74a in the vehicle width direction and a center position ST2 of the front passenger seat 74b. With such an arrangement, the blowing port 11 does not overlap with any of the HUD 76, the instrument panel 781, and the meter hood 782.

As shown in FIG. 2, the air blowout apparatus 10 according to the present embodiment may have blowing ports 42 and 43 at positions different from the position of the blowing port 11. When the blowing port 11 is referred to as a first blowing port, the blowing port 42 may be referred to as a second blowing port, and the blowing port 43 may be referred to as a third blowing port. The blowing ports 42 and 43 are air blowing ports connected to each other through a duct of the air conditioning unit 20, and blow out the air flowing out of the air conditioning unit 20 into the vehicle interior. The blowing port 11, the blowing port 42, and the blowing port 43 are connected in parallel to the air conditioning unit 20.

The blowing ports 42 and 43 are provided on the ornamental surface portion 1b of the instrument panel 1 facing the rear side of the vehicle, which is the side of the seats 74a and 74b. The blowing ports 42 and 43 are located on the vehicle front side in the vehicle longitudinal direction with respect to the driver's seat 74a and the front passenger seat 74b.

The blowing port 42 is located on the opposite side of the front passenger seat 74b across the center position ST 1 of the driver's seat 74a in the vehicle width direction. The blowing port 42 is configured as a side face blowing port on the driver's seat side configured to blow the air toward the driver's seat 74a. The blowing port 42 is provided with, for example, a manual louver for changing a blowing direction of the air from the blowing port 42. An occupant operates the louver so as to enable the blowing port 42 to blow out the air in a desired direction.

On the other hand, the blowing port 43 is located on a side opposite to the driver's seat 74a across the center position ST2 of the front passenger seat 74b in the vehicle width direction. The blowing port 43 is configured as a side face blowing port on the front passenger seat side configured to blow the air toward the front passenger seat 74b. The blowing port 43 is provided with, for example, a manual louver for changing the blowing direction of the air from the blowing port 43. The occupant operates the louver so as to enable the blowing port 43 to blow out the air in a desired direction.

The blowing ports 42 and 43 may be referred to as side face blowing ports, and the blowing port 11 may be referred to as a center blowing port. The air flow deflection door 13 shown in FIG. 1 allows the blowing port 11 to blow out the air, whose temperature has been adjusted, into the vehicle interior space as a target space by switching three blowing modes, namely, a defroster blowing mode, an upper vent blowing mode, and a face blowing mode.

In this example, in the defroster blowing mode, the air is blown toward the windshield 2 to clear fogging of a window. The face blowing mode blows out the air toward an upper body of the front seat occupant. In the upper vent blowing mode, the air is blown out upward from the face blowing mode to blow the air to a rear seat occupant. Hereinafter, the defroster blowing mode may be simply referred to as a defroster mode. In addition, the face blowing mode may be simply referred to as a face mode, and the upper vent blowing mode may be simply referred to as an upper vent mode.

As shown in FIG. 1, the blowing port 11 is configured by an opening portion provided at an end of the duct 12. In other words, the duct 12 is connected to the blowing port 11. The duct 12 is a flow channel forming portion that internally provides an air flow channel 12A connected to an air flow upstream side of the blowing port 11. The duct 12 is made of a resin configured separately from the air conditioning unit 20, and is connected to the air conditioning unit 20. An end portion of the duct 12 on the air flow upstream side communicates with a defroster-face opening portion 30 of the air conditioning unit 20. Accordingly, the duct 12 internally provides an air flow channel 12A in which the air blown from the air conditioning unit 20 flows. The duct 12 may be integrally formed with the air conditioning unit 20.

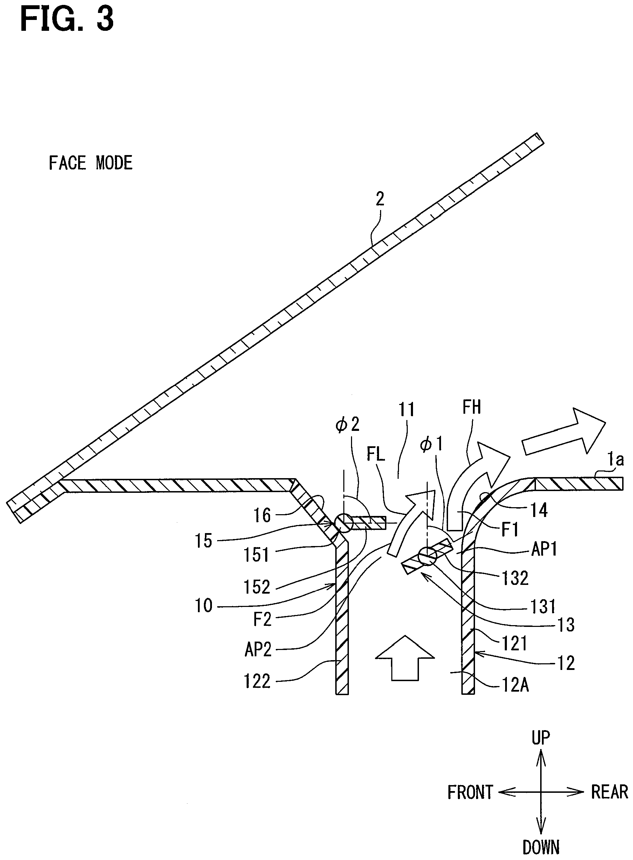

As shown in FIG. 3, the duct 12 has a first wall 121 located on the rear side and a second wall 122 located on the front side. The first wall 121 may be referred to as a rear wall and the second wall 122 may be referred to as a front wall. The first wall 121 and the second wall 122 face each other in the longitudinal direction. In the present embodiment, the longitudinal direction is "a direction in which the first wall 121 and the second wall 122 face each other", and the lateral direction is "a direction that intersects with the direction in which the first wall 121 and the second wall 122 face each other". A direction from the front to the rear corresponds to "a direction from the second wall 122 to the first wall 121", and a direction from the rear to the front corresponds to "a direction from the first wall 121 to the second wall 122".

The air flow deflection door 13 is located in the air flow channel 12A in the duct 12. The air flow deflection door 13 is a first air flow deflection member configured to generate two air flows having different flow rates in the duct 12. The air flow deflection door 13 changes a rate of the air flows between a first flow channel AP1 and a second flow channel AP2 inside the duct 12. The first flow channel AP1 is formed between the air flow deflection door 13 and the first wall 121 of the duct 12. The second flow channel AP2 is formed between the air flow deflection door 13 and the second wall 122 of the duct 12.

In the present embodiment, a butterfly door is employed as the air flow deflection door 13. The air flow deflection door 13 has a rotary shaft 131 and two door plate portions 132 extending in different directions from the rotary shaft 131. The rotary shaft 131 is located in parallel with the longitudinal direction of the blowing port 11, which is the lateral direction of the vehicle. For that reason, the air flow deflection door 13 is rotational about the longitudinal direction of the blowing port 11 as an axis center. A length of the two door plate portions 132 in the vehicle longitudinal direction is smaller than the width of the duct 12 in the vehicle longitudinal direction. A width of the air flow deflection door 13 in the direction in which the two door plate portions 132 extend from the rotary shaft 131 is smaller than a width of the duct 12 in the longitudinal direction of the vehicle. For that reason, the air flow channel 12A in the duct 12 is not blocked in any rotational position of the air flow deflection door 13. The rotary shaft 131 is located on the rear side of the vehicle relative to a center of the duct 12 in the longitudinal direction of the vehicle. This is because a flow channel cross-sectional area of the first flow passage AP1 is reduced to produce an air flow at a high flow rate in the first flow passage AP1. The air flow deflection door 13 formed of a butterfly door may have one door plate portion 132, and a rotary shaft 131 may be provided at the center portion of the one door plate portion 132.

In this example, the air flow produced in the first flow channel AP1 is referred to as a first air flow F1, and the air flow produced in the second flow channel AP2 is referred to as a second air flow F2. The air flow deflection door 13 is configured to switch between a first state, in which the first air flow F1 is higher in flow rate than the second air flow F2, and a second state, in which an air flow different from the first state, is produced inside the duct 12 according to a rotary position of the air flow deflection door 13. The air flow deflection door 13 is configured to adjust a difference in flow rate between the first air flow F1 and the second air flow F2 depending on the rotational position of the air flow deflection door 13. In the following description, the air flow produced in the first flow channel AP1 may be referred to as a first air flow F1, and the air flow produced in the second flow channel AP2 may be referred to as a second air flow F2.

The first wall 121 of the duct 12 has a guide wall 14 at a portion on the blowing port 11 side. The guide wall 14 is connected to the upper surface portion 1a of the instrument panel 1. The guide wall 14 guides the air flow at the high flow rate by bending the air flow at the high flow rate along the wall surface by the Coanda effect so that the direction of the air flow at the high flow rate is directed rearward from the blowing port 11. In other words, the guide wall 14 guides the air flowing through the air flow channel 12A so as to be blown out from the blowing port in the direction from the second wall 122 toward the first wall 121.

With the guide wall 14, a flow channel width in the blowing port 11 side portion of the duct 12, that is, the distance between the first wall 121 and the second wall 122 is widened toward the air flow downstream side. In this example, the guide wall 14 is curved such that a wall surface facing the air flow channel 12A is convex toward the air flow channel 12A inside the duct 12.

The second wall 122 of the duct 12 has a guide wall 16 on the blowing port 11 side. The guide wall 16 is connected to the upper surface portion 1a of the instrument panel 1. The guide wall 16 is connected to a portion of the upper surface portion 1a closer to the front side of the vehicle than the blowing port 11. The guide wall 16 guides the air flow at the high flow rate by bending the air flow at the high flow rate along the wall surface by the Coanda effect so that the direction of the air flow at the high flow rate is directed forward from the blowing port 11. In other words, the guide wall 16 guides the air flowing through the air flow channel 12A so as to be blown out from the blowing port in the direction from the first wall 121 toward the second wall 122.

Similarly, with the guide wall 16, a flow channel width in the blowing port 11 side portion of the duct 12, that is, the distance between the first wall 121 and the second wall 122 is widened toward the air flow downstream side. The guide wall 14 and the guide wall 16 widen a distance between the first wall 121 and the second wall 122 toward the air flow downstream side. In this example, a wall surface of the guide wall 16, which is directed to the air flow channel 12A, is a flat inclined surface. The guide wall 14 corresponds to the first guide wall in the present embodiment, and the guide wall 16 corresponds to the second guide wall in the present embodiment.

The air flow deflection door 15 is located in the air flow channel 12A in the duct 12. The air flow deflection door 15 is located in a portion of the air flow channel 12A which is located on the air flow downstream side of the air flow deflection door 13. The air flow deflection door 15 is located at a position, which is above the second flow channel AP2 on the air flow downstream side of the second flow channel AP2, in the air flow channel 12A. The air flow deflection door 15 is located in a portion of the air flow channel 12A which is located on the vehicle upper side and the vehicle front side of the air flow deflection door 13. The air flow deflection door 15 is a second air flow deflection member configured to deflect the second air flow F2 flowing through the second flow channel AP2.

In the present embodiment, a cantilever door is employed as the air flow deflection door 15. The air flow deflection door 15 includes a rotary shaft 151 and a door plate portion 152 extending radially outward from the rotary shaft 151. The rotary shaft 151 is located in parallel with the longitudinal direction of the blowing port 11, which is the lateral direction of the vehicle. For that reason, the air flow deflection door 15 is rotational about the longitudinal direction of the blowing port 11 as an axis center. The rotary shaft 151 is located along the lower side of the guide wall 16. A length of the door plate portion 152 in the longitudinal direction of the vehicle is smaller than a dimension of the guide wall 16 in the vertical direction. A width of the air flow deflection door 15 in the direction in which the door plate portion 152 extends from the rotary shaft 151 is smaller than a vertical dimension of the guide wall 16. For that reason, the air flow deflection door 15 is entirely positioned below the upper surface portion 1a of the instrument panel 1 regardless of the rotational position. The air flow deflection door 15 is entirely closer to the air flow channel 12A than the blowing port 11, regardless of its rotational position. The air flow deflection door 15 formed of the cantilever door may have one door plate portion 152, and a rotary shaft 151 may be provided on one side of the one door plate portion 152.

The air flow deflection door 13 and the air flow deflection door 15 are both pivoted doors that rotate about the rotational axis lines, respectively. The rotational axis 131 of the air flow deflection door 13 and the rotary shaft 151 of the air flow deflection door 15 extend in the lateral direction of the vehicle and are parallel to each other. In other words, a rotational axis line of the air flow deflection door 13 and a rotational axis line of the air flow deflection door 15 are parallel to each other. The rotary shafts 131 and 151, which are parallel to each other, are both rotationally supported by the duct 12. Ends of the rotary shaft 131 and the rotary shaft 151 on the same side protrude to the outside of the duct 12, and are connected to each other by a link mechanism 18. At an input end of the link mechanism 18, a servomotor 19 is provided as a common driving force source for the air flow deflection door 13 and the air flow deflection door 15. The link mechanism 18 is configured to transmit a driving force from the servomotor 19 and interlock the air flow deflection door 13 and the air flow deflection door 15 connected to the two output ends.

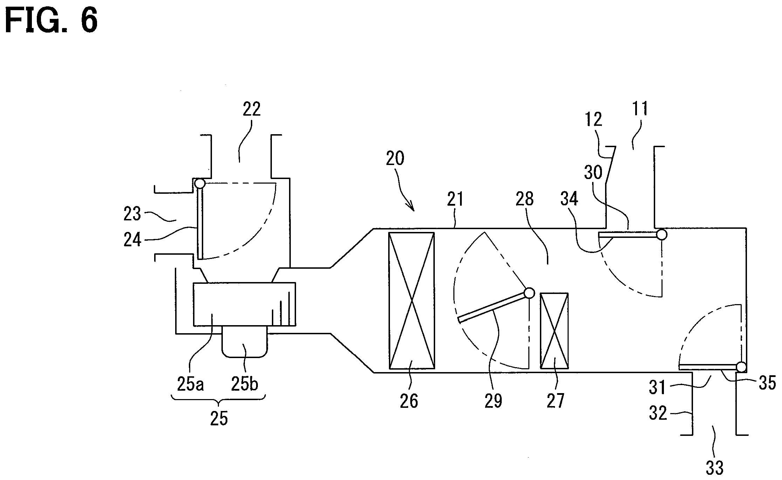

As shown in FIG. 6, the air conditioning unit 20 includes an air conditioning casing 21 configuring an outer shell. The air conditioning casing 21 configures an air passage for introducing an air into the vehicle interior, which is an air-conditioning target space. The air conditioning casing 21 has an inside air intake port 22 for intake of an inside air, which is an air inside the vehicle interior, and an outside air intake port 23 for intake of an outside air, which is an air outside the vehicle interior, provided in the uppermost upstream portion of the air flow. Further, an intake port opening and closing door 24 for selectively opening and closing the inside air intake port 22 and the outside air intake port 23 is provided at the most upstream portion of the air flow of the air conditioning casing 21. The inside air intake port 22, the outside air intake port 23, and the intake port opening and closing door 24 configure an inside-outside air switch unit for switching the intake air into the air conditioning casing 21 to the inside air and the outside air. The operation of the intake port opening and closing door 24 is controlled according to a control signal output from a control device.

A blower 25 serving as a blowing device for blowing the air into the vehicle interior is located on the air flow downstream side of the intake port opening and closing door 24. The blower 25 according to the present embodiment is an electric blower that drives a centrifugal multi-blade fan 25a by an electric motor 25b as a driving source, and a rotation speed of the blower 25 is controlled by a control signal output from the control device. As a result, a blowing rate by the blower 25 is controlled.

An evaporator 26, which functions as a cooler for cooling the air blown by the blower 25, is located on the air flow downstream side of the blower 25. The evaporator 26 is a heat exchanger for exchanging a heat between a refrigerant and an air flowing in the evaporator 26, and configures a vapor compression type refrigeration cycle together with a compressor, a condenser, an expansion valve, and so on.

A heater core 27, which functions as a heater for heating the air cooled by the evaporator 26, is located on the air flow downstream side of the evaporator 26. The heater core 27 of the present embodiment is a heat exchanger that heats air using the coolant water of the vehicle engine as a heat source. The evaporator 26 and the heater core 27 configure a temperature adjustment unit for adjusting a temperature of the air blown into the vehicle interior.

A cold air bypass passage 28 is provided on the air flow downstream side of the evaporator 26 so as to allow the air after passing through the evaporator 26 to flow around the heater core 27. In this example, a temperature of the airs mixed on the air flow downstream side of the heater core 27 and the cold air bypass passage 28 changes depending on an air volume ratio of the air passing through the heater core 27 and the air passing through the cold air bypass passage 28. For that reason, an air mixing door 29 is located on the air flow downstream side of the evaporator 26 and on an inlet side of the heater core 27 and the cold air bypass passage 28. The air mixing door 29 continuously changes the air volume ratio of the cold air flowing into the heater core 27 and the cold air bypass passage 28, and functions as a temperature adjustment unit together with the evaporator 26 and the heater core 27. The operation of the air mixing door 29 is controlled according to a control signal output from the control device.

A defroster-face opening portion 30 and a foot opening portion 31 are provided at the most downstream portion of the air flow of the air conditioning casing 21. The defroster-face opening portion 30 is connected to the blowing port 11 provided in the upper surface portion 1a of the instrument panel 1 through the duct 12. The foot opening portion 31 is connected to a foot blowing port 33 through a foot duct 32.

A defroster-face door 34 for opening and closing the defroster-face opening 30 is located on the air flow upstream side of the defroster-face opening portion 30. A foot door 35 for opening and closing the foot opening portion 31 is located on the air flow upstream side of the foot opening portion 31. The defroster-face door 34 and the foot door 35 are blowing mode doors for switching a blowing state of the air blown into the vehicle interior to another.

The air flow deflection door 13 and the air flow deflection door 15 operate in conjunction with the air blowing mode doors 34 and 35 so as to achieve a desired air blowing mode. The operation of the air flow deflection doors 13 and 15 and the air blowing mode doors 34 and 35 is controlled according to a control signal output from the control device. The positions of the air flow deflection doors 13 and 15 and the air blowing mode doors 34 and 35 can also be changed by manual operation of an occupant.

For example, when the foot mode in which the air is blown from the foot blowing port 33 to feet of the occupant is executed as the air blowing mode, the defroster-face door 34 closes the defroster-face opening portion 30 and the foot door 35 opens the foot opening portion 31. On the other hand, when any one of the defroster mode, the upper vent mode, and the face mode is executed as the blowing mode, the defroster-face door 34 opens the defroster-face opening portion 30 and the foot door 35 closes the foot opening portion 31. Further, in that case, the positions of the air flow deflection door 13 and the air flow deflection door 15 are the positions corresponding to the desired air blowing mode.

In the present embodiment, the air flow deflection door 13 is rotated to change the rotational position, thereby changing the respective flow rates of the first air flow F1 passing through the first flow channel AP1 and the second air flow F2 passing through the second flow channel AP2. As a result, an air blowing angle θis changed. As shown in FIG. 1, the air blowing angle θ is an angle defined by the blowing direction with respect to the vehicle vertical direction. In this example, the reason why the vertical direction of the vehicle is used as a reference is that a direction of the air flow passing between a portion of the first wall 121 on the air flow upstream side of the guide wall 14 and a portion of the second wall 122 on the air flow upstream side of the guide wall 16 is directed from the bottom to the top. Therefore, the air blowing angle θ is a bending angle of the air flow.

When the air blowing mode is the face mode, a door angle Φ1 of the air flow deflection door 13 is set to an angle shown in FIG. 3. In other words, the door plate portion 132 of the air flow deflection door 13 is inclined so that a distance between the door plate portion 132 and the first wall 121 becomes smaller toward the air flow direction. As a result, a cross-sectional area of the first flow channel AP1 becomes smaller than a cross-sectional area of the second flow channel AP2, the first air flow F1 produced in the first flow channel AP1 becomes an air flow at a relatively high flow rate, and the second air flow F2 produced in the second flow channel AP2 becomes an air flow at a relatively low flow rate. In other words, relatively, the first air flow F1 becomes an air flow at a high flow rate FH, and the second air flow F2 becomes an air flow at a low flow rate FL, resulting in the first state in which the first air flow F1 is higher in flow rate than the second air flow F2.

In the first state, the first air flow F1, which is the air flow at the high flow rate FH, flows along the guide wall 14 by the Coanda effect, and is bent toward the rear side. At that time, a negative pressure is generated on the downstream side of the air flow deflection door 13 by a flow of the air flow at the high flow rate FH. For that reason, the second air flow F2, which is the air flow at a low flow rate FL, is drawn into the downstream side of the air flow deflection door 13, and merges with the first air flow F1 while being bent toward the first air flow F1 side. As a result, the air blowing angle θ at which the air flowing through the duct 12 is blown out from the blowing port 11 by being bent toward the rear side of the vehicle can be increased. As a result, an air whose temperature is adjusted by the air conditioning unit 20, for example, a cold air, is blown out from the blowing port 11 toward the upper body of the front seat occupant.

In the face mode, the air flow deflection door 15 is rotated to a position where the door plate portion 152 extends substantially in the longitudinal direction as shown in FIG. 3. In other words, the air flow deflection door 15 is set at a position where a door angle Φ2 shown in FIG. 3 is about 90 degrees. The door plate portion 152 is located so as to project in a direction from the second wall 122 toward the first wall 121 with the vicinity of the second wall 122 as a base end. At that time, a leading edge of the door plate portion 152 is located on the second wall 122 side which is the front side of the air flow deflection door 13 in the longitudinal direction. The direction of the second air flow F2 is greatly changed from the upward direction to a direction along the first air flow F1 by the air flow deflection door 15 located in this manner.

In particular, the air flow at the low flow rate flowing along the second wall 122 may be directed in the direction from the second wall 122 toward the first wall 121. For that reason, the entirety of the second air flow F2 at the low flow rate can be drawn into the first air flow F1 at the high flow rate. As a result, the second air flow F2 drawn into the first air flow F1 can be increased, and the air volume of the blowout air blown out from the blowing port 11 toward the rear of the vehicle can be increased.

At that time, the difference in flow rate between the first air flow F1 and the second air flow F2 can be adjusted by the occupant manually adjusting the position of the air flow deflection door 13 or the control device automatically adjusting the position of the air flow deflection door 13. The larger the difference in flow rate between the first air flow F1 at the high flow rate and the second air flow F2 at the low flow rate, the larger the bending angle of the air blown out from the blowing port 11. This enables to set the air blowing angle θ in the face mode to an arbitrary angle.

When the rotational position of the air flow deflection door 13 is changed, the rotational position of the air flow deflection door 15 is also changed in association with the positional change of the air flow deflection door 13. When the door angle Φ1 of the air flow deflection door 13 becomes smaller, the door angle Φ2 of the air flow deflection door 15 also becomes smaller in conjunction with the smaller door angle Φ1. Therefore, the degree of deflection of the second air flow F2 by the air flow deflection door 15 is changed in accordance with the difference in flow rate between the first air flow F1 and the second air flow F2. The greater the difference in flow rate between the first air flow F1 and the second air flow F2, the greater the degree of deflection of the direction of the second air flow F2 to the direction from the second wall 122 toward the first wall 121.

The air blowing angle θ in the face mode can be finely controlled by the actions of the air flow deflection door 13 and the air flow deflection door 15. As a result, in the face mode, for example, the configuration enables to switch between a mode in which the air conditioning wind is blown toward a chest of the occupant and a mode in which the conditioned air is blown toward a face of the occupant. The air blowing angle θ can be continuously changed.

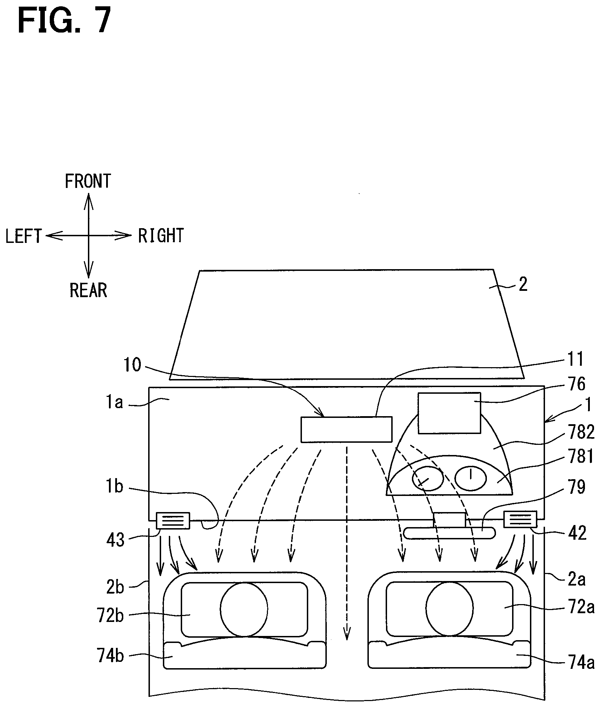

Further, as shown in FIG. 7, in the face mode, for example, a cold air is blown out from the blowing ports 11, 42, and 43 into the vehicle interior. The air whose temperature has been adjusted by the air conditioning unit 20 is blown out from the blowing port 11 toward the upper bodies of the occupants 72a and 72b as indicated by broken line arrows, passes between the two front seats 74a and 74b, and reaches rear seats located rearward of the front seats 74a and 74b. At the same time, the air flowing out from the air conditioning unit 20 is also blown out from the blowing ports 42 and 43 as indicated by solid line arrows.

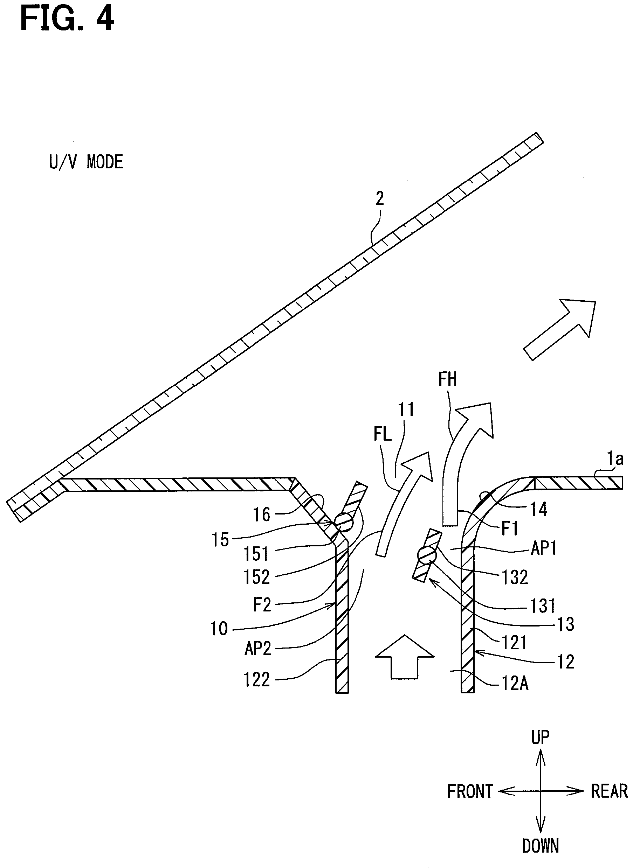

When the air blowing mode is the upper vent mode, the door angle of the air flow deflection door 13 is set to an angle shown in FIG. 4. In the upper vent mode, the door angle Φ1 of the air flow deflection door 13 is smaller than that in the face mode. In addition, the door angle Φ2 of the air flow deflection door 15 interlocked with the air flow deflection door 13 is also reduced. Also in that case, the first state is formed in which the first air flow F1 is higher in flow rate than the second air flow F2, but since the difference in flow rate between the first air flow F1 and the second air flow F2 is smaller than that in the case of the face mode, the blowing angle θ is smaller than that in the case of the face mode.

As a result, the air whose temperature is adjusted by the air conditioning unit 20, for example, the cold air, is blown out from the blowing port 11 toward the rear seat occupant. In the upper vent mode, the door angle Φ2 of the air flow deflection door 15 is smaller than that in the face mode. Therefore, the air flow deflection door 15 is enabled to deflect the second air flow F2 so as to align the direction of the second air flow F2 with the direction along the first air flow F1. This makes it difficult for the air flow deflection door 15 to become a draft resistance of the second air flow F2.

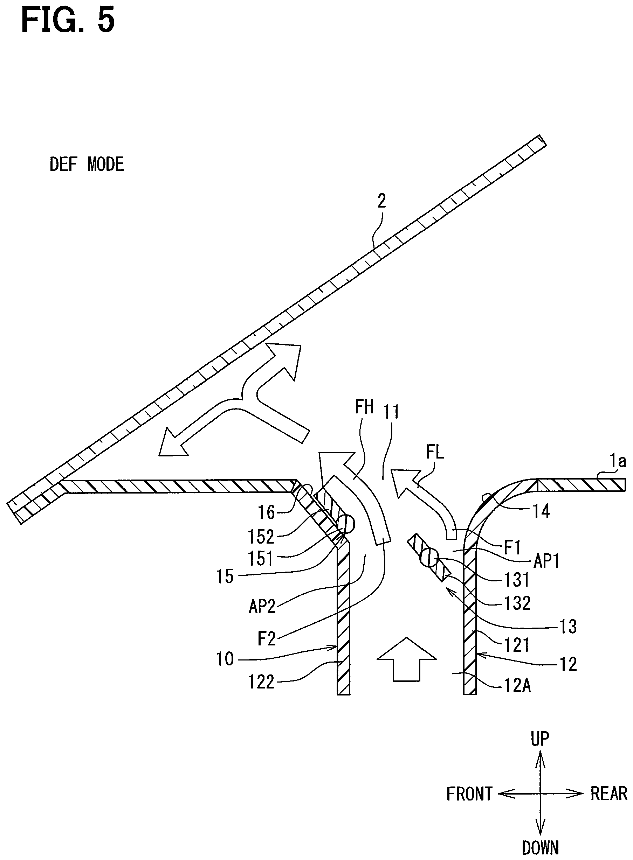

When the blowing mode is the defroster mode, the door angle of the air flow deflection door 13 is set to an angle shown in FIG. 5. In other words, the door plate portion 132 of the air flow deflection door 13 is inclined toward the air flow direction so that a distance between the door plate portion 132 and the second wall 122 becomes smaller. As a result, the first air flow F1 produced in the first flow channel AP1 becomes an air flow relatively low in the flow rate, and the second air flow F2 produced in the second flow channel AP 2 becomes an air flow relatively high in the flow rate. In other words, relatively, the second air flow F2 becomes the air flow at the high flow rate FH, and the first air flow F1 becomes the air flow at the low flow rate FL, so that the second state in which the air flow different from that in the first state is produced is formed. In the defroster mode, a state is formed in which the second air flow F2 is higher in flow rate than the first air flow F1 in the second state.

In such a state, the second air flow F2, which is the air flow at the high flow rate FH, flows along the guide wall 16 by the Coanda effect, thereby being bent forward. In the defroster mode, the air flow deflection door 15 is rotated to a position where the door plate portion 152 is along the guide wall 16 as shown in FIG. 5. Thus, the air flow deflection door 15 located along the guide wall 16 forms a substantial Coanda surface.

When the air flow deflection door 13 forms the second state and the second air flow F2 is higher in flow rate than the first air flow F1, the air flow deflection door 15 prohibits deflection of the direction of the second air flow F2 to the direction from the second wall 122 toward the first wall 121. The air flow deflection door 15 deflects the direction of the second air flow F2 to the direction from the first wall 121 toward the second wall 122 by the Coanda effect. The air flow deflection door 15 located at a position along the guide wall 16 is unlikely to be the draft resistance of the second air flow F2.

Since the second air flow F2 flows as the air flow at the high flow rate FH, a negative pressure is generated on the downstream side of the air flow deflection door 13. For that reason, the first air flow F1, which is the air flow at the low flow rate FL, is drawn into the downstream side of the air flow deflection door 13, and merges with the second air flow F2 while being bent toward the second air flow F2 side. As a result, the air flowing inside the duct 12 can be largely bent toward the front side of the vehicle and blown out from the blowing port 11. As a result, air whose temperature has been adjusted by the air conditioning unit 20, for example, a hot air, is blown out from the blowing port 11 toward the windshield 2.

Even in the defroster mode, the difference in flow rate between the first air flow F1 and the second air flow F2 can be adjusted by manually adjusting the position of the air flow deflection door 13 by the occupant or automatically adjusting the position by the control device. The larger the difference in flow rate between the second air flow F2 at the high flow rate and the first air flow F1 at the low flow rate, the larger the bending angle of the air blown out from the blowing port 11. As a result, the air blowing angle in the defroster mode can be set to an arbitrary angle.

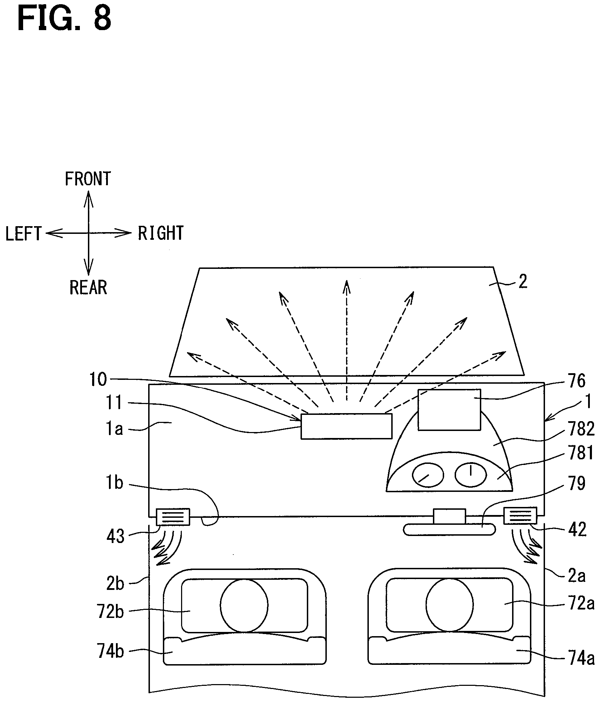

Further, as shown in FIG. 8, in the defroster mode, for example, the hot air is blown out from the blowing ports 11, 42, and 43 into the vehicle interior. The air whose temperature has been adjusted by the air conditioning unit 20 is blown out from the blowing port 11 toward an inner surface which is a surface of the windshield 2 on the vehicle compartment side, as indicated by broken line arrows. At the same time, the air flowing out from the air conditioning unit 20 is also blown out toward the side window glasses 2a and 2b from the blowing ports 42 and 43 as indicated by solid line arrows.

According to the air blowout apparatus 10 of the present embodiment, the following advantages can be obtained.

The air blowout apparatus 10 includes the blowing port 11, the duct 12, and the air flow deflection door 13 which is the first air flow deflection member. The blowing port 11 blows the air into the target space. The duct 12 has the first wall 121 and the second wall 122 facing the first wall 121, and internally provides the air flow channel 12A connected to the air flow upstream side of the blowing port 11. The air flow deflection door 13 is provided in the air flow channel 12A, and is configured to generate the two air flows having different flow rates in the air flow channel 12A.

In the present embodiment, in the air flow channel 12A, the first flow channel AP1 is provided between the air flow deflection door 13 and the first wall 121, and the air flow produced in the first flow channel AP1 is provided as the first air flow F1. The space between the air flow deflection door 13 and the second wall 122 is defined as the second flow channel AP2, and the air flow produced in the second flow channel AP2 is defined as the second air flow F2. The air flow deflection door 13 is configured to switch between the first state in which the first air flow F1 is higher in flow rate than the second air flow F2 and the second state in which the air flow different from that in the first state is produced inside the duct 12. In addition, the duct 12 has the guide wall 14 on a part of the first wall 121 on the side of the blowing port 11. The guide wall 14 guides the first air flow F1 so that the first air flow F1 in the first state is bent along the wall surface and the direction of the first air flow F1 is directed from the second wall 122 to the first wall 121.

The air blowout apparatus 10 further includes the air flow deflection door 15, which is a second air flow deflection member that is provided in a portion of the air flow channel 12A on the air flow downstream side of the air flow deflection door 13 and is configured to deflect the second air flow F2. The air flow deflection door 15 deflects the direction of the second air flow F2 to a direction from the second wall 122 toward the first wall 121 when the air flow deflection door 13 forms the first state. The air flow deflection door 15 prohibits deflection of the second air flow F2 to the direction from the second wall 122 toward the first wall 121 when the air flow deflection door 13 forms the second state.

According to the above configuration, when the air flow deflection door 13 forms the first state, the air flow deflection door 15 deflects the direction of the second air flow F2 to the direction from the second wall 122 toward the first wall 121. This facilitates to draw the second air flow F2 at the low flow rate into the first air flow F1 at the high flow rate, and makes it difficult for the second air flow F2 to diffuse in the blowing port 11. As a result, when the first state is formed, the air volume of the blowout air blown out from the blowing port 11 in the direction from the second wall 122 toward the first wall 121 can be increased.

On the other hand, when the air flow deflection door 13 forms the second state, the air flow deflection door 15 prohibits the deflection of the direction of second air flow F2 to the direction from the second wall 122 toward the first wall 121. Therefore, the blowout of the second air flow F2 from the blowing port 11 is hardly reduced. As a result, when the second state is formed, it easily enables to secure the air volume of the blowout air blown out from the blowing port 11. In this manner, a stable air volume of the blowing air can be ensured regardless of whether the air flow produced in the duct 12 is in the first state or the second state.

When the air flow deflection door 13 forms the second state and the second air flow F2 is higher in flow rate than the first air flow F1, the air flow deflection door 15 deflects the direction of the second air flow F2 in the direction from the first wall 121 toward the second wall 122. According to the above configuration, when a state in which the second air flow F2 is higher in flow rate than the first air flow F1 in the second state is formed, the air volume of the blowing air blown out from the blowing port 11 in the direction from the first wall 121 toward the second wall 122 can be increased. In the defroster mode, a state in which the second air flow F2 in the second state is higher in flow rate than the first air flow F1 is provided.

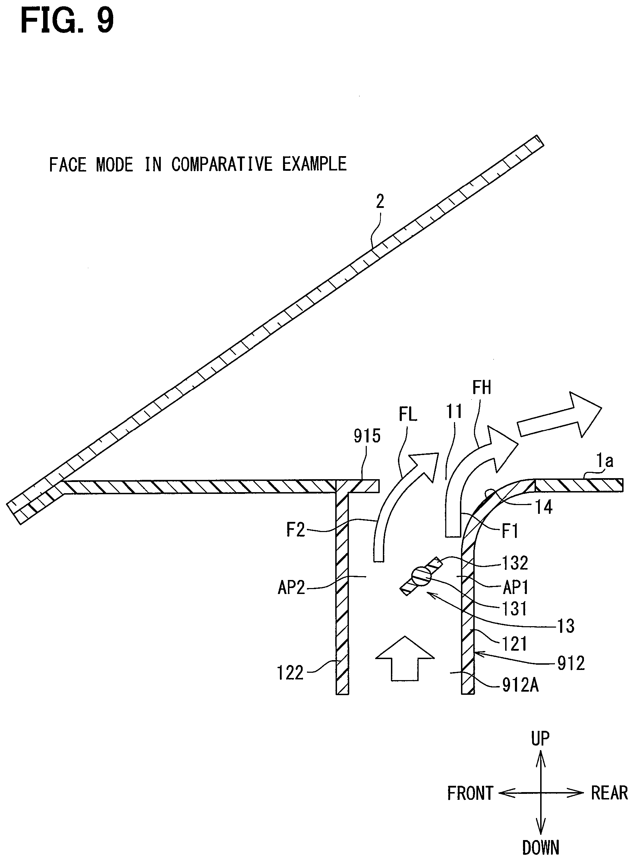

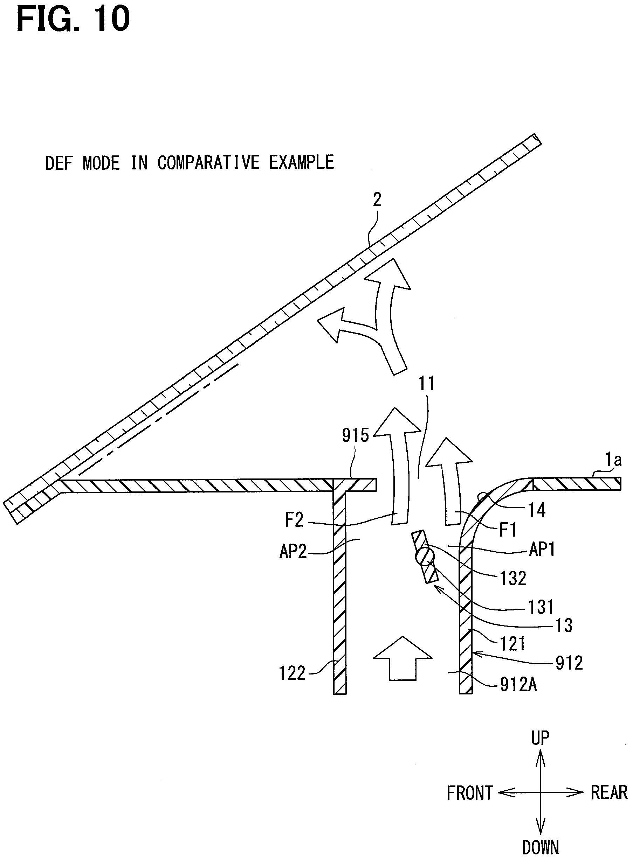

FIGS. 9 and 10 show an example of an air blowout apparatus in a comparative example. In the air blowout apparatus of the comparative example, an air flow deflection door 15 is not provided in an air flow channel 912A in a duct 912, and a duct 912 does not have a guide wall 16. In the air blowout apparatus of the comparative example, a protrusion portion 915 is provided so as to protrude from a second wall 122 of the duct 912 toward a first wall 121.

In the air blowout apparatus of the comparative example, in the face mode shown in FIG. 9, an air conditioning wind can be blown out from the air blowing port 11 in substantially the same manner as that in the air blowout apparatus 10 of the present embodiment. However, in the defroster mode shown in FIG. 10, the protrusion portion 915 inhibits a flow of the second air flow F2, and reduces the volume of air blown out from the blowing port 11. Further, since the air conditioning wind blown out from the blowing port 11 is hard to bend in the direction from the first wall 121 toward the second wall 122, for example, it is difficult to clear fogging in a region near a lower end of the windshield 2 indicated by a dashed-dotted line in FIG. 10.

On the other hand, according to the present embodiment, the configuration enables to supply the air conditioning wind to an entire area of an interior side surface of the windshield 2 in the defroster mode. Since the air conditioning wind can be provided over a wide range of the windshield 2 in the defroster mode, the degree of freedom of the setting position of the blowing port 11 in the longitudinal direction of the vehicle is large. For that reason, there is no need to provide a defroster blowing port separately from the blowing port 11. Further, since the configuration enables to reduce a pressure loss in the defroster mode and it is difficult to reduce the blowing air volume from the blowing port 11, fogging can be stably restricted.

The air blowout apparatus 10 of the present embodiment employs the two air flow deflection doors 13 and 15. When the air flow deflection door 15 forms the first state, the greater the difference in flow rate between the first air flow F1 and the second air flow F2, the greater the degree of deflection of the direction of the second air flow F2 to the direction from the second wall 122 toward the first wall 121, when the air flow deflection door 13 forms the first state. According to the above configuration, the air blowing angle θ can be controlled with precision by the two doors 13 and 15, and fine vertical wind direction control can be performed. For example, an air blowing angle characteristic that is relatively linear with respect to the rotation angle of the servomotor 19 can be obtained. In the air blowout apparatus 10, the air blowing angle θ can be continuously changed at least from the face mode to the upper vent mode, and the air blowing angle control with relatively high linearity can be performed with respect to the rotation angle input.

The air flow deflection door 13 and the air flow deflection door 15 are connected to each other through the link mechanism 18 and interlocked with each other. According to the above configuration, the air flow deflection door 13 and the air flow deflection door 15 can be easily interlocked with each other, and the two doors 13 and 15 can be interlocked with each other using the servomotor 19 as a common driving source.

The air flow deflection door 13 and the air flow deflection door 15 are both pivoted doors that rotate about the respective rotational axis lines. The rotational axis line of the air flow deflection door 13 and the rotational axis line of the air flow deflection door 15 are parallel to each other. The above configuration easily enables to perform the rotation input of both the doors 13 and 15 at the end on the same side in the direction in which the two rotational axis lines extend. The two doors 13 and 15 can be easily connected to each other by the link mechanism 18 at the same end in the direction in which the rotational axis lines extend.

The air flow deflection door 13 is a butterfly door having the rotary shaft 131 and the two door plate portions 132 extending in different directions from the rotating shaft 131. This makes it difficult for the air flow deflection door 13 to cause a draft resistance in the air flow channel 12A, and enables to stably distribute the air to the first flow channel AP1 and the second flow channel AP2. In addition, since the door plate portions 132 are provided on both sides of the rotary shaft 131, the rotation torque due to the reception of the air at the time of the air distribution is hardly caused. This facilitates angular control of the door.

The air flow deflection door 15 is a cantilever door having the rotary shaft 151 and one door plate portion 152 extending in the radially outward direction from the rotary shaft 151. This facilitates to stably adjust the deflection of the second air flow F2.

Also, the entire air flow deflection door 15 is configured to be placed on the side of the air flow channel 12A from the blowing port 11, regardless of the movement position of the air flow deflection door 15. Accordingly, even when the air flow deflection door 15 is moved to any position, the air flow deflection door 15 can be restricted from protruding from the blowing port 11. In other words, in any case of the air blowing mode of the air blowout apparatus 10, the air flow deflection door 15 does not protrude above the upper surface portion 1a in which the blowing port 11 is opened. This makes it difficult for the air flow deflection door 15 to enter the field of view of the occupants 72a and 72b.

The duct 12 has the guide wall 16 on a part of the second wall 122 on the blowing port 11 side. The guide wall 16 guides the second air flow F2 so that the second air flow F2 is bent along the wall surface and the direction of the second air flow F2 is directed from the first wall 121 to the second wall 122. This enables to easily bend the direction of the second air flow F2 in a direction from the first wall 121 toward the second wall 122 by using the Coanda effect of the guide wall 16.

In the face mode or the upper vent mode, the guide wall 14 is used to blow out the blowout air toward the rear side of the vehicle, and in the defroster mode, the guide wall 16 is used to blow out the blowout air toward the front side of the vehicle. With the provision of the guide wall 16 in this manner, the windshield 2 can be securely anti-fogged.

In the embodiment described above, the air flow deflection door 13 is a butterfly door in which the door plate portion 132 extends in two directions from the rotational axis 131, and the air flow deflection door 15 is a cantilever door in which the door plate portion 152 extends in one direction from the rotary shaft 151. However, the present disclosure is not limited to the above configuration. For example, the first air flow deflection member may be a cantilever door. The first air flow deflection member may be a slide door that slides in the longitudinal direction of the vehicle.

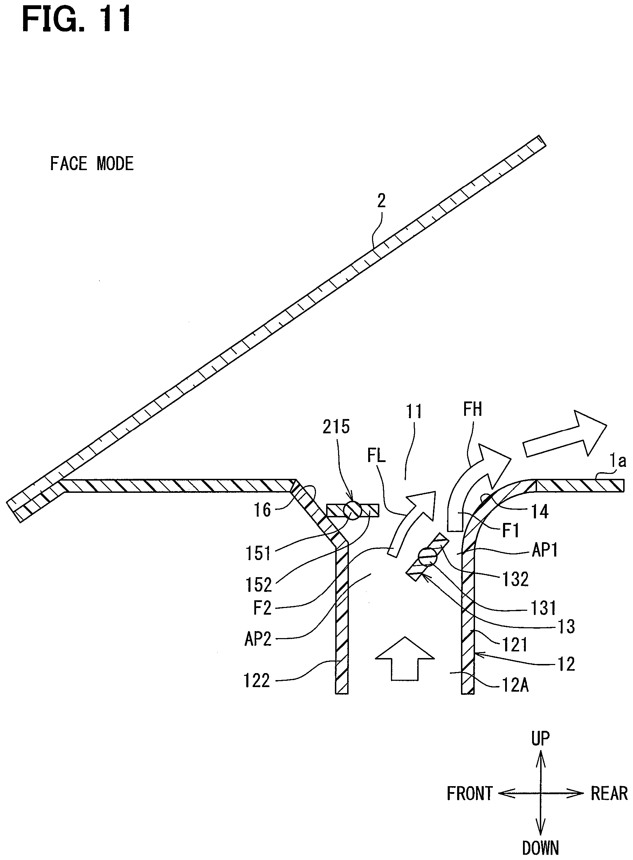

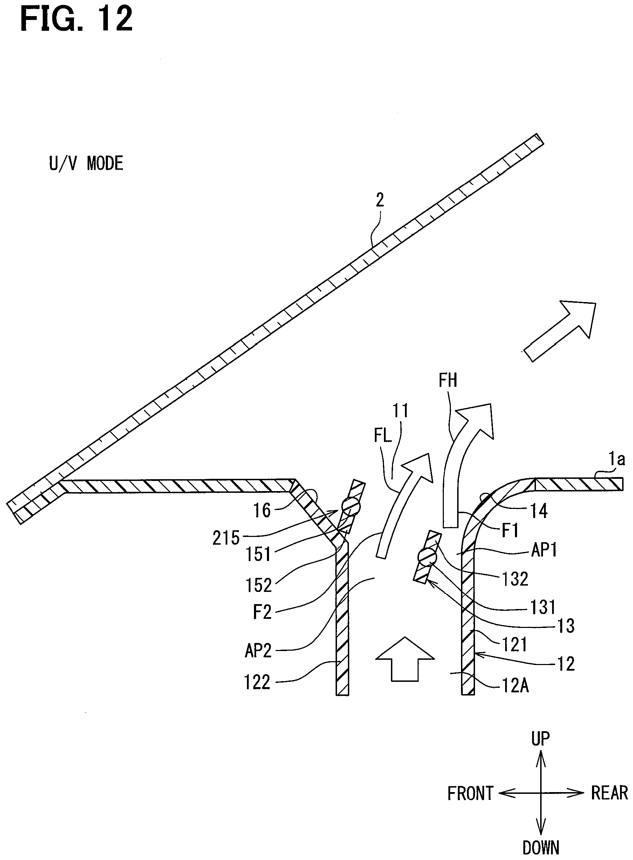

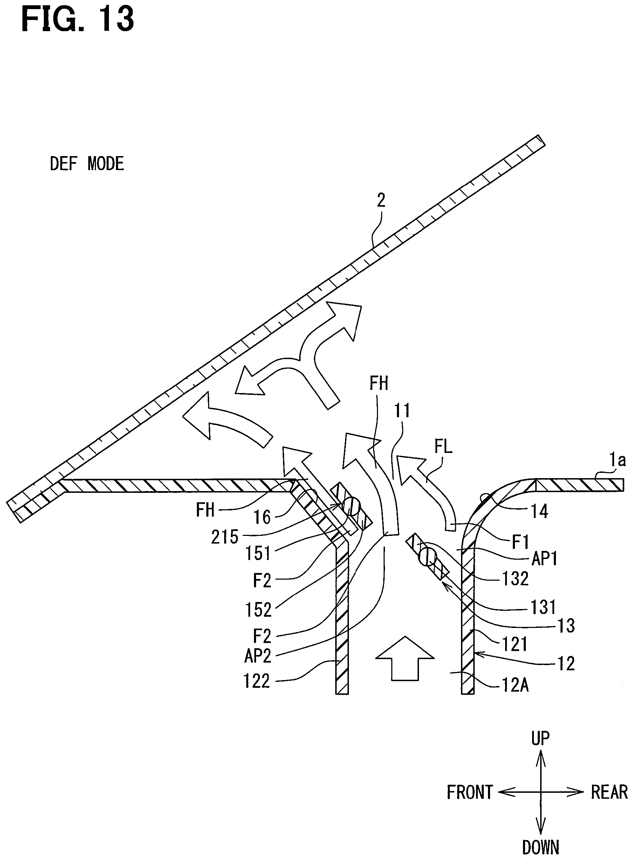

As shown in FIGS. 11 to 13, the second air flow deflection member may be an air flow deflection door 215 formed of a butterfly door. As a result, as shown in FIGS. 11 and 12, in the face mode and the upper vent mode, the configuration enables to perform substantially the same wind direction control as in the first embodiment and blow out the air conditioning wind from the blowing port 11. As shown in FIG. 13, in the defroster mode, the air conditioning wind can also be blown out from the blowing port 11 as an air flow channel between the air flow deflection door 215 and the guide wall 16. According to the above configuration, it is possible to more reliably perform anti-fogging in a region near a lower end of the windshield 2.

The second air flow deflection member may be a slide door that slides in the longitudinal direction of the vehicle. In this case, a protrusion amount of the slide door, which is the second air flow deflection member, protruding from the second wall 122 may be changed in accordance with a difference in flow rate between the first air flow F1 and the second air flow F2 produced by the first air flow deflection member.

In the embodiment described above, the guide wall 14, which is the first guide wall, has a curved surface in which the wall surface facing the air flow channel 12A is convex toward the air flow channel 12A inside the duct 12. In the guide wall 16, which is the second guide wall, the wall surface facing the air flow channel 12A is a flat inclined surface. However, the present invention is not limited to the above configuration. For example, the wall surface of the first guide wall may be a flat inclined surface. Further, for example, the wall surface of the second guide wall may be a curved surface convex toward the air flow channel. Further, for example, the wall surface of the first guide wall or the wall surface of the second guide wall may be a stepped wall surface.

In the embodiment described above, the air blowout apparatus 10 has the guide wall 16 in the duct 12, but the present disclosure is not limited to the above configuration, and the second wall 122 may not be provided with a guide wall.

In the embodiment described above, the air blowout apparatus has been described in which the air blowing angle can be continuously changed by continuously changing the rotation angular position of the air flow deflection doors 13 and 15, but the present disclosure is not limited to the above configuration. For example, the air blowout apparatus may be provided in which the air flow deflection doors 13 and 15 can stop only at multiple preset rotation stop angular positions and can change the air blowing angle in a stepwise manner.

In the embodiment described above, the blowing port 11 is located at the center portion of the vehicle interior in the vehicle width direction, but the present disclosure is not limited to the above configuration. For example, the blowing port may be provided in the upper surface portion of the instrument panel at a portion on the front side of the driver's seat and a portion on the front side of the front passenger seat.

In the embodiment described above, the blowing ports 42 and 43 as the side face blowing ports are provided, but may not be provided. In addition, a blowing port other than the blowing ports 11, 42, and 43 may be provided.

In the embodiment described above, the disclosed technique is applied to the air blowout apparatus in which the blowing port 11 is located in the upper surface portion 1a of the instrument panel 1, but the present disclosure is not limited to the above configuration. For example, the disclosed technique may be applied to an air blowout apparatus having a foot blowing port as a blowing port located on a lower surface portion of an instrument panel. According to the above configuration, the air blowing angle of the air blown out from the foot blowing port can be arbitrarily changed.

In the embodiment described above, the air flow deflection door 15 prohibits the deflection of the direction of the second air flow F2 to the direction from the second wall 122 toward the first wall 121 when the air flow deflection door 13 forms the second state, but the present disclosure is not limited to the above configuration. The second air flow deflection member may be configured to lower the degree of deflection of the direction of the second air flow F2 to the direction from the second wall 122 toward the first wall 121 when the first air flow deflection member forms the second state more than that when the first air flow deflection member forms the first state. Also in this case, when the second state is formed, the reduction of blowing out the second air flow can be alleviated, and the air volume of the blowing air blown out from the blowing port can be easily secured.

In the embodiment described above, the disclosure is applied to the air blowout apparatus for use in an air conditioning device for a vehicle.

The air blowout apparatus described above includes the duct 12 and the first air flow deflection member 13. The duct 12 has the blowing port 11 for blowing out the air into the target space, the first wall 121, and the second wall 122 that faces the first wall, and internally provides the air flow channel 12A connected to the air flow upstream side of the blowing port. The first air flow deflection member 13 is provided in the air flow channel, and is configured to generate the two air flows having different flow rates in the air flow channel. In the air flow channel, the first flow channel AP1 is provided between the first air flow deflection member and the first wall, and the air flow produced in the first flow channel is the first air flow F1. In the air flow channel, the second flow channel AP2 is provided between the first air flow deflection member and the second wall, and the air flow provided in the second flow channel is the second air flow F2. The first air flow deflection member is configured to be switchable between a first state in which the first air flow is higher in flow rate than the second air flow and a second state in which an air flow different from the first state is formed inside the duct. The duct has the guide wall 14 on a part of the first wall on the blowing port side. The guide wall 14 bends the first air flow in the first state along the wall surface, and guides the first air flow so that the direction of the first air flow is directed in the direction from the second wall toward the first wall. The air blowout apparatus further includes the second air flow deflection members 15 and 215, which are provided in the portion of the air flow channel on the air flow downstream side of the first air flow deflection member, and are configured to deflect the second air flow. The second air flow deflection member is configured to deflect the direction of the second air flow to the direction from the second wall toward the first wall when the first air flow deflection member forms the first state. The second air flow deflection member is further configured to reduce the degree of deflection of the direction of the second air flow to the direction from the second wall toward the first wall more than that when the first air flow deflection member forms the first state, or to inhibit the deflection of the direction of the second air flow to the direction from the second wall toward the first wall, when the first air flow deflection member forms the second state.

According to the above configuration, when the first air flow deflection member forms the first state, the second air flow deflection member deflects the direction of the second air flow in the direction from the second wall toward the first wall. Therefore, the second air flow at the low flow rate is easily drawn into the first air flow at the high flow rate, and the second air flow is unlikely to be diffused at the blowing port. As a result, when the first state is formed, the air volume of the blowing air blown out from the blowing port in the direction from the second wall toward the first wall can be increased.

On the other hand, when the first air flow deflection member forms the second state, the second air flow deflection member lowers the degree of deflection of the direction of the second air flow to the direction from the second wall toward the first wall, compared to that when the first state is formed. Alternatively, the deflection of the direction of the second air flow to the direction from the second wall toward the first wall is prohibited. This makes it difficult to reduce the blowout of the second air flow from the blowing port. As a result, when the second state is formed, it easily enables to secure the air volume of the blowout air blown out from the blowing port. In this manner, a stable air volume of the blowing air can be ensured regardless of whether the air flow produced in the duct is in the first state or the second state.

## Claims

1. An air blowout apparatus for use in an air conditioning device for a vehicle, comprising:
a blowing port (11) configured to be located in an upper surface portion (1a) of an instrument panel (1) of the vehicle and configured to blowout an air into a target space;
a duct (12) including a first wall (121) and a second wall (122) facing the first wall (121), the duct (12) internally forming an air flow channel (12A) connected to an upstream side of the blowing port (11) with respect to an air flow; and
a first air flow deflection member (13) located in the air flow channel (12A) and configured to generate two air flows having different flow rates in the air flow channel (12A), wherein
when, in the air flow channel (12A), a space between the first air flow deflection member (13) and the first wall (121) is defined as a first flow channel (AP1), an air flow produced in the first flow channel (AP1) is defined as a first air flow (F1),
when, in the air flow channel (12A), a space between the first air flow deflection member (13) and the second wall (122) is defined as a second flow channel (AP2), an air flow produced in the second air flow channel (12A) is defined as a second air flow (F2),
the first air flow deflection member (13) is configured to switch between a first state, in which the first air flow (F1) is higher in flow rate than the second air flow (F2), and a second state, in which the second air flow (F2) is higher in flow rate than the first air flow (F1) such that a negative pressure is generated on a downstream side of the first air flow deflection member (13) whereby the first air flow (F1) is drawn into the downstream side of the first air flow deflection member (13) and merges with the second air flow (F2) while being bent toward the second air flow (F2) side, inside the duct (12),
the duct (12) includes a guide wall (14) as a part of the first wall (121) on a blowing port (11) side,
the guide wall (14) is configured to guide the first air flow (F1) in the first state to bend the first air flow (F1) along a wall surface and to direct a direction of the first air flow (F1) from the second wall (122) toward the first wall (121),
the air blowout apparatus further includes a second air flow deflection member (15) configured to deflect the second air flow (F2),
the second air flow deflection member (15) is configured, when the first air flow deflection member (13) forms the first state, to deflect the direction of the second air flow (F2) to a direction from the second wall (122) toward the first wall (121),
the second air flow deflection member (15) is configured, when the first air flow deflection member (13) forms the second state, to inhibit deflection of the direction of the second air flow (F2) to the direction from the second wall (122) toward the first wall (121) such that air whose temperature has been adjusted by the air conditioning device can be blown out from the blowing port (11) toward a windshield of the vehicle, and
the second air flow deflection member (15) is a cantilever door including a rotary shaft (151) and one door plate portion (152), the one door plate portion extending radially outward from the rotary shaft (151),
wherein
the first air flow deflection member (13) is a butterfly door including a rotary shaft (131) and two door plate portions (132), the two door plate portions extending in different directions from the rotary shaft (131), **characterized in that**
the second air flow deflection member (15) is provided in a portion of the air flow channel (12A) on a downstream side of the first air flow deflection member (13).

2. The air blowout apparatus according to claim 1, wherein
when the first air flow deflection member (13) forms the second state, the second air flow deflection member (15) is configured to deflect the direction of the second air flow (F2) to the direction from the first wall (121) toward the second wall (122).

3. The air blowout apparatus according to claim 1 or 2, wherein
the second air flow deflection member (15) is configured to increase the degree of deflection of the direction of the second air flow (F2) to the direction from the second wall (122) toward the first wall (121), as a difference in flow rate between the first air flow (F1) and the second air flow (F2) increases.

4. The air blowout apparatus according to any one of claims 1 to 3, wherein
the first air flow deflection member (13) and the second air flow deflection member (15) are connected to each other through a link mechanism (18) and are interlocked with each other.

5. The air blowout apparatus according to any one of claims 1 to 4, wherein
each of the first air flow deflection member (13) and the second air flow deflection member (15) is a pivoted door configured to rotate about a rotational axis line, and
the rotational axis line of the first air flow deflection member (13) and the rotational axis line of the second air flow deflection member (15) are parallel to each other.

6. The air blowout apparatus according to any one of claims 1 to 5, wherein
the second air flow deflection member (15) is entirely located on a side of the air flow channel (12A) than the blowing port (11), regardless of a movement position of the second air flow deflection member (15).

7. The air blowout apparatus according to any one of claims 1 to 6, wherein
the guide wall (14) includes a first guide wall (14),
the duct (12) includes a second guide wall (16) as a part of the second wall (122) on the side of the blowing port (11), and
the second guide wall (16) is configured to guide the second air flow (F2) to bend the second air flow (F2) along its wall surface and to direct the direction of the second air flow (F2) to the direction from the first wall (121) toward the second wall (122).

## Patentansprüche

1. Luftausblasvorrichtung zur Verwendung in einer Klimaanlage für ein Fahrzeug, die Folgendes aufweist:
eine Ausblasöffnung (11), die konfiguriert ist, um in einem oberen Flächenabschnitt (1a) eines Armaturenbretts (1) des Fahrzeugs angeordnet zu werden, und konfiguriert ist, um Luft in einen Zielraum auszublasen;
einen Kanal (12), der eine erste Wand (121) und eine zweite Wand (122) aufweist, die der ersten Wand (121) zugewandt ist, wobei der Kanal (12) innen einen Luftströmungskanal (12A) ausbildet, der in Bezug auf eine Luftströmung mit einer stromaufwärtigen Seite der Ausblasöffnung (11) verbunden ist; und
ein erstes Luftströmungsablenkungselement (13), das sich in dem Luftströmungskanal (12A) befindet und konfiguriert ist, um zwei Luftströmungen mit unterschiedlichen Strömungsraten in dem Luftströmungskanal (12A) zu erzeugen, wobei
wenn in dem Luftströmungskanal (12A) ein Raum zwischen dem ersten Luftströmungsablenkungselement (13) und der ersten Wand (121) als ein erster Strömungskanal (AP1) definiert ist, eine in dem ersten Strömungskanal (AP1) erzeugte Luftströmung als eine erste Luftströmung (F1) definiert ist,
wenn in dem Luftströmungskanal (12A), ein Raum zwischen dem ersten Luftströmungsablenkungselement (13) und der zweiten Wand (122) als ein zweiter Strömungskanal (AP2) definiert ist, eine in dem zweiten Luftströmungskanal (12A) erzeugte Luftströmung als eine zweite Luftströmung (F2) definiert ist,
das erste Luftströmungsablenkungselement (13) konfiguriert ist, um zwischen einem ersten Zustand, in dem die erste Luftströmung (F1) eine höhere Strömungsrate als die zweite Luftströmung (F2) hat, und einem zweiten Zustand umzuschalten, in dem die zweite Luftströmung (F2) eine höhere Strömungsrate als die erste Luftströmung (F1) hat, sodass ein Unterdruck auf einer stromabwärtigen Seite des ersten Luftströmungsablenkungselements (13) erzeugt wird, wodurch die erste Luftströmung (F1) in die stromabwärtige Seite des ersten Luftströmungsablenkungselements (13) gesaugt wird und sich innerhalb des Kanals (12) mit der zweiten Luftströmung (F2) vereinigt, während sie zu der Seite der zweiten Luftströmung (F2) gebeugt wird,
der Kanal (12) eine Führungswand (14) als einen Teil der ersten Wand (121) auf einer Seite der Ausblasöffnung (11) umfasst,
die Führungswand (14) konfiguriert ist, um die erste Luftströmung (F1) in dem ersten Zustand zu führen, um die erste Luftströmung (F1) entlang einer Wandfläche zu beugen und eine Richtung der ersten Luftströmung (F1) von der zweiten Wand (122) zu der ersten Wand (121) zu richten,
die Luftausblasvorrichtung ferner ein zweites Luftströmungsablenkungselement (15) aufweist, das konfiguriert ist, um die zweite Luftströmung (F2) abzulenken,
das zweite Luftströmungsablenkungselement (15) konfiguriert ist, wenn das erste Luftströmungsablenkungselement (13) den ersten Zustand bildet, um die Richtung der zweiten Luftströmung (F2) zu einer Richtung von der zweiten Wand (122) zu der ersten Wand (121) abzulenken,
das zweite Luftströmungsablenkungselement (15) konfiguriert ist, wenn das erste Luftströmungsablenkungselement (13) den zweiten Zustand bildet, um eine Ablenkung der Richtung der zweiten Luftströmung (F2) zu der Richtung von der zweiten Wand (122) zu der ersten Wand (121) zu verhindern, sodass Luft, deren Temperatur durch die Klimatisierungsvorrichtung angepasst worden ist, von der Ausblasöffnung (11) zu einer Windschutzscheibe des Fahrzeugs ausgeblasen werden kann, und
das zweite Luftströmungsablenkungselement (15) eine Auslegerklappe mit einer Drehwelle (151) und einem Klappenplattenabschnitt (152) ist, wobei sich der eine Klappenplattenabschnitt von der Drehwelle (151) radial nach außen erstreckt, wobei
das erste Luftströmungsablenkungselement (13) eine Schmetterlingsklappe mit einer Drehwelle (131) und zwei Klappenplattenabschnitten (132) ist, wobei sich die zwei Klappenplattenabschnitte von der Drehwelle (131) in unterschiedliche Richtungen erstrecken, **dadurch gekennzeichnet, dass**
das zweite Luftströmungsablenkungselement (15) in einem Abschnitt des Luftströmungskanals (12A) auf einer stromabwärtigen Seite des ersten Luftströmungsablenkungselements (13) vorgesehen ist.

2. Luftausblasvorrichtung nach Anspruch 1, wobei,
wenn das erste Luftströmungsablenkungselement (13) den zweiten Zustand bildet, das zweite Luftströmungsablenkungselement (15) konfiguriert ist, um die Richtung der zweiten Luftströmung (F2) zu der Richtung von der ersten Wand (121) zu der zweiten Wand (122) abzulenken.

3. Luftausblasvorrichtung nach Anspruch 1 oder 2, wobei
das zweite Luftströmungsablenkungselement (15) konfiguriert ist, um den Ablenkungsgrad der Richtung der zweiten Luftströmung (F2) zu der Richtung von der zweiten Wand (122) zu der ersten Wand (121) zu erhöhen, wenn eine Differenz der Strömungsrate zwischen der ersten Luftströmung (F1) und der zweiten Luftströmung (F2) zunimmt.

4. Luftausblasvorrichtung nach einem der Ansprüche 1 bis 3, wobei
das erste Luftströmungsablenkungselement (13) und das zweite Luftströmungsablenkungselement (15) durch einen Koppelmechanismus (18) miteinander verbunden sind und miteinander verkoppelt sind.

5. Luftausblasvorrichtung nach einem der Ansprüche 1 bis 4, wobei
sowohl das erste Luftströmungsablenkungselement (13) als auch das zweite Luftströmungsablenkungselement (15) eine Schwenkklappe ist, die konfiguriert ist, um um eine Drehachsenlinie zu drehen, und
die Drehachsenlinie des ersten Luftströmungsablenkungselements (13) und die Drehachsenlinie des zweiten Luftströmungsablenkungselements (15) parallel zueinander sind.

6. Luftausblasvorrichtung nach einem der Ansprüche 1 bis 5, wobei
sich das zweite Luftströmungsablenkungselement (15) ungeachtet einer Bewegungsposition des zweiten Luftströmungsablenkungselements (15) bezüglich der Ausblasöffnung (11) vollständig auf einer Seite des Luftströmungskanals (12A) befindet.

7. Luftausblasvorrichtung nach einem der Ansprüche 1 bis 6, wobei
die Führungswand (14) eine erste Führungswand (14) aufweist,
der Kanal (12) eine zweite Führungswand (16) als einen Teil der zweiten Wand (122) auf der Seite der Ausblasöffnung (11) aufweist und
die zweite Führungswand (16) konfiguriert ist, um die zweite Luftströmung (F2) zu führen, um die zweite Luftströmung (F2) entlang ihrer Wandfläche zu beugen und die Richtung der zweiten Luftströmung (F2) zu der Richtung von der ersten Wand (121) zu der zweiten Wand (122) zu richten.

## Revendications

1. Appareil de soufflage d'air à utiliser dans un dispositif de climatisation pour un véhicule, comprenant :
un orifice de soufflage (11) configuré pour être situé dans une partie de surface supérieure (1a) d'un tableau de bord (1) du véhicule et configuré pour souffler de l'air dans un espace cible ;
un conduit (12) comprenant une première paroi (121) et une seconde paroi (122) faisant face à la première paroi (121), le conduit (12) formant intérieurement un canal de flux d'air (12A) relié à un côté amont de l'orifice de soufflage (11) par rapport à un flux d'air ; et
un premier élément de déviation de flux d'air (13) situé dans le canal de flux d'air (12A) et configuré pour générer deux flux d'air ayant des débits différents dans le canal de flux d'air (12A), dans lequel
lorsque, dans le canal de flux d'air (12A), un espace entre le premier élément de déviation de flux d'air (13) et la première paroi (121) est défini comme un premier canal d'écoulement (AP1), un flux d'air produit dans le premier canal d'écoulement (AP1) est défini comme un premier flux d'air (F1),
lorsque, dans le canal de flux d'air (12A), un espace entre le premier élément de déviation de flux d'air (13) et la seconde paroi (122) est défini comme un second canal d'écoulement (AP2), un flux d'air produit dans le second canal de flux d'air (12A) est défini comme un second flux d'air (F2),
le premier élément de déviation de flux d'air (13) est configuré pour basculer entre un premier état, dans lequel le premier flux d'air (F1) présente un débit supérieur à celui du second flux d'air (F2), et un second état, dans lequel le second flux d'air (F2) présente un débit supérieur à celui du premier flux d'air (F1), de sorte qu'une dépression est générée sur un côté aval du premier élément de déviation de flux d'air (13), ce qui permet au premier flux d'air (F1) d'être aspiré vers le côté aval du premier élément de déviation de flux d'air (13) et de se mélanger au second flux d'air (F2) tout en étant infléchi en direction du second flux d'air (F2) à l'intérieur du conduit (12),
le conduit (12) comprend une paroi de guidage (14) faisant partie de la première paroi (121) du côté de l'orifice de soufflage (11),
la paroi de guidage (14) est configurée pour guider le premier flux d'air (F1) dans le premier état de manière à infléchir le premier flux d'air (F1) le long d'une surface de paroi et à diriger une direction du premier flux d'air (F1) depuis la seconde paroi (122) vers la première paroi (121),
l'appareil de soufflage d'air comprend en outre un second élément de déviation de flux d'air (15) configuré pour dévier le second flux d'air (F2),
le second élément de déviation de flux d'air (15) est configuré, lorsque le premier élément de déviation de flux d'air (13) forme le premier état, pour dévier la direction du second flux d'air (F2) vers une direction depuis la seconde paroi (122) vers la première paroi (121),
le second élément de déviation de flux d'air (15) est configuré, lorsque le premier élément de déviation de flux d'air (13) forme le second état, pour empêcher la déviation de la direction du second flux d'air (F2) vers la direction depuis la seconde paroi (122) vers la première paroi (121) de sorte que l'air dont la température a été réglée par le dispositif de climatisation puisse être soufflé depuis l'orifice de soufflage (11) vers un pare-brise du véhicule, et
le second élément de déviation de flux d'air (15) est une porte en porte-à-faux comprenant un arbre rotatif (151) et une partie de plaque de porte (152), la partie de plaque de porte s'étendant radialement vers l'extérieur à partir de l'arbre rotatif (151), dans lequel
le premier élément de déviation de flux d'air (13) est une porte papillon comprenant un arbre rotatif (131) et deux parties de plaque de porte (132), les deux parties de plaque de porte s'étendant dans des directions différentes à partir de l'arbre rotatif (131), **caractérisé en ce que**
le second élément de déviation de flux d'air (15) est prévu dans une partie du canal de flux d'air (12A) sur un côté en aval du premier élément de déviation de flux d'air (13).

2. Appareil de soufflage d'air selon la revendication 1, dans lequel lorsque le premier élément de déviation de flux d'air (13) forme le second état, le second élément de déviation de flux d'air (15) est configuré pour dévier la direction du second flux d'air (F2) vers la direction depuis la première paroi (121) vers la seconde paroi (122).

3. Appareil de soufflage d'air selon la revendication 1 ou 2, dans lequel
le second élément de déviation de flux d'air (15) est configuré pour augmenter le degré de déviation de la direction du second flux d'air (F2) vers la direction depuis la seconde paroi (122) vers la première paroi (121), à mesure qu'une différence de débit entre le premier flux d'air (F1) et le second flux d'air (F2) augmente.

4. Appareil de soufflage d'air selon l'une des revendications 1 à 3, dans lequel
le premier élément de déviation de flux d'air (13) et le second élément de déviation de flux d'air (15) sont reliés l'un à l'autre par un mécanisme de liaison (18) et sont verrouillés l'un avec l'autre.

5. Appareil de soufflage d'air selon l'une des revendications 1 à 4, dans lequel
le premier élément de déviation de flux d'air (13) et le second élément de déviation de flux d'air (15) sont chacun une porte pivotante configurée pour tourner autour d'une ligne d'axe de rotation, et
la ligne d'axe de rotation du premier élément de déviation de flux d'air (13) et la ligne d'axe de rotation du second élément de déviation de flux d'air (15) sont parallèles l'une à l'autre.

6. Appareil de soufflage d'air selon l'une des revendications 1 à 5, dans lequel
le second élément de déviation de flux d'air (15) est entièrement situé sur un côté du canal de flux d'air (12A) par rapport à l'orifice de soufflage (11), quelle que soit la position de déplacement du second élément de déviation de flux d'air (15).

7. Appareil de soufflage d'air selon l'une des revendications 1 à 6, dans lequel
la paroi de guidage (14) comprend une première paroi de guidage (14),
le conduit (12) comprend une seconde paroi de guidage (16) faisant partie de la seconde paroi (122) sur le côté de l'orifice de soufflage (11), et
la seconde paroi de guidage (16) est configurée pour guider le second flux d'air (F2) afin de infléchir le second flux d'air (F2) le long de sa surface de paroi et de diriger la direction du second flux d'air (F2) vers la direction depuis la première paroi (121) vers la seconde paroi (122).
